Europäisches Patentamt

European Patent Office

Office européen des brevets

(11) Veröffentlichungsnummer: **0 151 551 B1**

# EUROPÄISCHE PATENTSCHRIFT

(45) Veröffentlichungstag der Patentschrift:
28.12.88

(21) Anmeldenummer: 85810006.8

(22) Anmeldetag: 11.01.85

(51) Int. Cl.⁴: **B 23 B 31/04**

(54) Spannfutter für Bohr- und/oder Fräswerkzeuge.

(30) Priorität: 09.02.84 DE 3404604

(43) Veröffentlichungstag der Anmeldung:
14.08.85 Patentblatt 85/33

(45) Bekanntmachung des Hinweises auf die Patenterteilung:
28.12.88 Patentblatt 88/52

(84) Benannte Vertragsstaaten:
CH DE FR GB LI

(56) Entgegenhaltungen:
EP-A- 0 108 411
DE-A- 2 842 783
DE-A- 3 125 455
GB-A- 2 136 723
US-A- 1 940 405

(73) Patentinhaber: HILTI Aktiengesellschaft,
FL-9494 Schaan (LI)

(72) Erfinder: Regelsberger, Wolfgang, Am
Volksammersbach 8, D-8832 Weissenburg i. Bayern (DE)
Erfinder: Rumpp, Gerhard, Ing.-grad., Schornstrasse 2,
D-8084 Inning (DE)
Erfinder: Spieth, Manfred, Ing.-grad., A.
Flemingstrasse 9, D-8033 Martinsried (DE)

(74) Vertreter: Wildl, Roland, Hilti Aktiengesellschaft
Patentabteilung, FL-9490 Schaan (LI)

## Beschreibung

Die Erfindung betrifft ein Spannfutter und ein Bohrwerkzeug, wobei das Bohrwerkzeug ein zylindrisches Einsteckende aufweist, das Spannfutter mit wenigstens zwei radial verstellbaren Führungsbacken und wenigstens einem radial verstellbaren, mit einer von der zylindrischen Mantelfläche des Einsteckendes abweichenden Anschlagfläche in Eingriff bringbaren Mitnahmeelement versehen ist und separate Betätigungselemente für das Verstellen der Führungsbacken und Mitnahmeelemente vorgesehen sind.

Für Werkzeuge der genannten Art sind Spannfutter bekannt, bei denen das Drehmoment mittels radial verstellbarer Spannbacken reibschlüssig auf das zylindrische Einsteckende des Werkzeuges übertragen wird. Der hauptsächliche Vorteil dieser Futter besteht darin, dass einfach herzustellende Werkzeuge mit glattem Einsteckende verwendet werden können. Der wesentliche Nachteil besteht darin, dass das durch Reibschluss übertragbare Drehmoment begrenzt ist. Zum Schlagbohren, d.h. zum gleichzeitigen Übertragen einer Drehbewegung und einer in Achsrichtung wirkenden Schlagbewegung, sind diese Spannfutter im allgemeinen nicht geeignet. Hierzu können allenfalls Spannfutter verwendet werden, die radial verstellbare Mitnahmeelemente aufweisen, wobei diese Mitnahmeelemente mit einer von der zylindrischen Mantelfläche des Einsteckendes abweichenden Anschlagfläche in Eingriff bringbar sind. Diese Spannfutter sind jeweils nur für ein bestimmtes Einsteckende ausgelegt, so dass eine Anpassung an unterschiedliche Durchmesser des Einsteckendes der Werkzeuge nicht möglich ist.

Ein weiteres aus der DE-A 1 552 265 bekanntes Spannfutter weist drei radial verstellbare Spannbacken sowie ein in eine dieser Spannbacken integriertes, radial verschiebbares Mitnahmeelement auf. Die Spannbacken werden mittels eines Gewinderinges in eine Konushülse hineingedrückt und dadurch radial gegen das zu spannende Einsteckende gepresst. Das Mitnahmeelement überragt die eine Spannbacke radial nach innen und kommt dabei mit einer entsprechenden Ausnehmung am Einsteckende des zu spannenden Werkzeuges in Eingriff. Das Mitnahmeelement kann somit nur zusammen mit den Spannbacken verstellt werden. Dies bedeutet, dass in diesem Spannfutter nur Werkzeuge mit einer bestimmten Ausnehmung am Einsteckende gespannt werden können.

Ein aus der US-A-1 940 405 bekanntes Spannfutter weist radial verstellbare Spannbacken und gegenüber den Spannbacken axial und radial versetzt angeordnete, ebenfalls radial verstellbare Mitnahmeelemente auf. Die Mitnahmeelemente greifen formschlüssig an Anschlagflächen eines im Spannfutter aufzunehmenden Werkzeuges an. Die Mitnahmeelemente dienen vor allem der Drehmitnahme des Werkzeuges, während die Spannbacken die Führung des Werkzeuges übernehmen. Die Spannbacken und die Mitnahmeelemente sind mittels unabhängig voneinander betätigbaren Betätigungselementen verstellbar. Für unterschiedliche Werkzeuggrössen müssen immer beide Betätigungselemente verstellt werden.

Ein weiteres, aus der EP-A-0 108 411 (dieses Dokument ist nur hinsichtlich der Neuheit, Art. 54.3, EPÜ, zu berücksichtigen) bekanntes Spannfutter ist mit über einen Zahnkranz radial verstellbaren Spannbacken und gegenüber diesen versetzt angeordneten, radial ausrückbaren Verriegelungselementen versehen, welche wahlweise mit einem in das Spannfutter eingesetzten Bohrwerkzeug in Eingriff gebracht werden können. Zusammen mit den Verrieglungselementen können in diesem Spannfutter nur Bohrwerkzeuge mit Einsteckende von einem bestimmten Einheitsdurchmesser verwendet werden.

Der Erfindung liegt die Aufgabe zugrunde, ein Spannfutter zu schaffen, das eine einfache Bedienbarkeit und eine kompakte Bauweise ermöglicht, sowie dazu geeignet ist, Bohrwerkzeuge aufzunehmen, welche zylindrische Einsteckenden unterschiedlicher Durchmesser und von der zylindrischen Mantelfläche abweichende Anschlagflächen aufweisen.

Gemäss der Erfindung wird dies dadurch erreicht, dass das Betätigungselement für die Führungsbacken als axial verstellbare Konushülse ausgebildet ist und das Betätigungselement für die Mitnahmeelemente als eine Steuerkurve aufweisender, auf der Konushülse begrenzt verdrehbar gelagerter Betätigungsring ausgebildet ist.

Durch die erfindungsgemässe Ausbildung können somit die Führungsbacken und Mitnahmeelemente sowohl miteinander als auch unabhängig voneinander verstellt werden. So ist es beispielsweise möglich, dass zum Wechseln des Werkzeuges nur die der Verriegelung dienenden Mitnahmeelemente verstellt werden müssen und die Führungsbacken auf dem eingestellten Durchmesser belassen werden können. Dies ergibt insbesondere bei häufigem Werkzeugwechsel eine erhebliche Zeiteinsparung. Ausserdem kann ein einmal eingestelltes Spiel zwischen den Führungsbacken und dem Einsteckende über längere Zeit konstant gehalten werden.

Für reine Drehbohrarbeiten werden die Mitnahmeelemente nicht benötigt. Damit der vorgesehene Durchmesserbereich der Einsteckenden durch die Mitnahmeelemente nicht beeinträchtigt wird, sind die Mitnahmeelemente in eine mit dem aufzunehmenden Einsteckende ausser Eingriff stehende Stellung verstellbar. Dieses Verstellen der Mitnahmeelemente erfolgt durch Verdrehen des Betätigungsringes, wobei die Mitnahmeelemente oder der Betätigungsring in dieser Stellung, beispielsweise mittels Rastmitteln, arretiert werden können.

Bei unterschiedlichem Durchmesser der Einsteckenden müssen die Führungsbacken radial verstellt und dem Einsteckende angepasst werden. In diesem Fall müssen jedoch meist auch die Mitnahmeelemente entsprechend verstellt werden. Durch die Anordnung des Führungsringes auf der Konushülse sind die Betätigungselemente für die Führungsbacken und Mitnahmeelemente miteinander koppelbar. Ein Verstellen der Führungsbacken hat somit gleichzeitig auch ein Verstellen der Mitnahmeelemente zur Folge. Dasselbe gilt beim Verstellen der Mitnahmeelemente auch für die Führungsbacken.

Die Ausbildung des Betätigungselementes für die Führungsbacken als axial verstellbare Konushülse ermöglicht eine kompakte Bauweise. Die Führungsbacken stützen sich dabei auf der Innenseite an der Konushülse ab. Beim Verstellen der Konushülse erfolgt eine Relativbewegung zwischen den Führungsbacken und der Konushülse in axialer und durch die Konizität der Konushülse auch in radialer Richtung.

Im Unterschied zu den Führungsbacken müssen die Mitnahmeelemente meist nicht sehr fein verstellt, sondern lediglich in eine eingerückte oder ausgerückte Stellung gebracht werden können. Der Betätigungsring für die Mitnahmeelemente weist daher eine Steuerkurve auf. Die Steuerkurve kann dabei sowohl in Umfangsrichtung als auch in axialer Richtung verlaufen.

Für das Ein- und Ausrücken der Mitnahmeelemente müssen die Betätigungselemente für die Führungsbacken sowie für die Mitnahmeelemente meist relativ zueinander verstellt werden. Um dies zu erleichtern, ist der Betätigungsring auf der Konushülse begrenzt drehbar gelagert. Eine solche Anordnung des Betätigungsringes ergibt ausserdem eine sehr kompakte Bauweise des Spannfutters.

Die Erfindung soll nachstehend anhand der sie beispielsweise wiedergebenden Zeichnungen näher erläutert werden. Es zeigen

Fig. 1 ein erfindungsgemässes Spannfutter mit formschlüssig eingespanntem Werkzeug, im Längsschnitt,

Fig. 2 einen Querschnitt durch das Spannfutter gemäss Fig. 1, entlang der Linie II–II,

Fig. 3 das Spannfutter entsprechend Fig. 1 und 2, jedoch im Reibschlussbetrieb,

Fig. 4 einen Querschnitt durch das Spannfutter gemäss Fig. 3, entlang der Linie IV–IV.

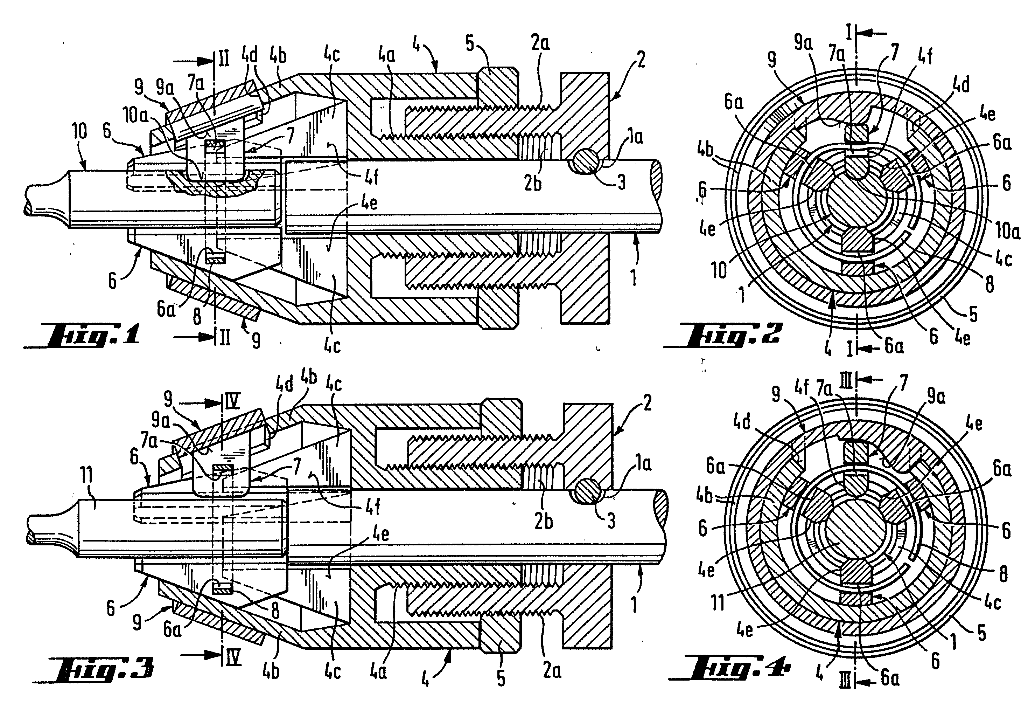

Das aus den Fig. 1 bis 4 ersichtliche Spannfutter ist mit einem maschinenseitigen, insgesamt mit 1 bezeichneten Döpper verbunden. Der Döpper 1 dient der Übertragung einer Dreh- und/oder Schlagbewegung von der Maschine auf ein Werkzeug. Die Verbindung des Spannfutters mit dem Döpper 1 erfolgt über einen insgesamt mit 2 bezeichneten Gewindering, der mittels eines tangential zum Döpper 1 verlaufenden Stifts 3 mit dem Döpper 1 verbunden ist. Der Döpper 1 ist zu diesem Zweck im Bereich des Stiftes 3 mit einer Ausnehmung 1a versehen, welche so ausgebildet sein kann, dass eine geringe axiale Verschiebbarkeit des Gewinderinges 2 gegenüber dem Döpper 1 ermöglicht wird. Der Gewindering 2 weist ein Aussengewinde 2a sowie ein Innengewinde 2b auf. Der Gewindering 2 ist über das Innengewinde 2b mit einer auf dem Döpper 1 drehbar gelagerten, insgesamt mit 4 bezeichneten Konushülse verbunden. Die Konushülse 4 weist zu diesem Zweck an ihrem rückwärtigen Bereich ein Gewinde 4a auf, das mit dem Innengewinde 2b in Eingriff steht. Durch Relativverdrehung der Konushülse 4 gegenüber dem Gewindering 2 wird die Konushülse 4 somit auf dem Döpper 1 in axialer Richtung verschoben. Damit die Konushülse 4 in einer bestimmten Stellung fixiert werden kann, ist auf dem Aussengewinde 2a eine Kontermutter 5 vorgesehen. Der vordere Bereich der Konushülse 4 ist als Konus 4b ausgebildet. Auf der Innenseite des Konus 4b weist die Konushülse 4 einen Führungsansatz 4c auf. Der Führungsansatz 4c ist mit radial verlaufenden Längsschlitzen 4e, 4f versehen, in denen drei insgesamt mit 6 bezeichnete Führungsbacken sowie ein insgesamt mit 7 bezeichnetes Mitnahmeelement axial und radial verschiebbar sind. Die Führungsbacken 6 stützen sich auf der Innenseite am Konus 4b ab. Die Führungsbacken 6 sowie das Mitnahmeelement 7 weisen einen Schlitz 6a, 7a auf, in welchen eine die Führungsbacken 6 bzw. das Mitnahmeelement 7 radial nach aussen treibende Ringfeder 8 eingeführt ist. Der Konus 4b wird auf der Aussenseite von einem insgesamt mit 9 bezeichneten Betätigungsring für das Mitnahmeelement 7 umgeben. Wie insbesondere die Fig. 2 und 4 zeigen, ist der Betätigungsring 9 mit einer Steuerkurve 9a versehen, welche durch einen Durchtritt 4d in das Innere der Konushülse 4 ragt. Der Betätigungsring 9 ist gegenüber der Konushülse 4 begrenzt verdrehbar. Durch ein Verdrehen des Betätigungsringes 9 kann die radiale Lage des Mitnahmeelementes 7 über die Steuerkurve 9a verändert werden.

Die Fig. 1 und 2 zeigen das Spannfutter mit einem eingespannten, insgesamt mit 10 bezeichneten Einsteckende. Das Einsteckende 10 ist mit einer Längsnut 10a versehen, in welche das Mitnahmeelement 7 eingreift. Die Drehmitnahme des Einsteckendes 10 erfolgt somit durch Formschluss des Mitnahmeelementes 7 mit der Längsnut 10a am Einsteckende 10. Die Führungsbacken 6 dienen der Führung des Einsteckendes 10 und können so eingestellt werden, dass ein geringes, eine Axialbewegung des Einsteckendes 10 gegenüber dem Spannfutter ermöglichendes, radiales Spiel entsteht. Eine solche axiale Beweglichkeit des Einsteckendes ist erwünscht zum Schlagbohren. Mit Hilfe der Kontermutter 5 kann verhindert werden, dass die Konushülse 4 gegenüber dem Gewindering 2 während des Betriebes verdreht und das eingestellte Spiel verändert wird. Zum Werkzeugwechsel bei gleichbleibendem Aussendurchmesser des Einsteckendes 10 kann lediglich der Betätigungsring 9 gegenüber der Konushülse 4 in die in Fig. 4 dargestellte Stellung verdreht und damit das Mitnahmeelement 7 ausser Eingriff mit dem Einsteckende 10 gebracht werden. Nach dem Einsetzen eines neuen Werkzeuges wird der Betätigungsring 9 wieder in die in Fig. 2 dargestellte Stellung zurückgedreht und das Mitnahmeelement 7 dadurch in formschlüssigen Eingriff mit dem Einsteckende 10 gebracht.

Im praktischen Einsatz müssen gelegentlich auch Werkzeuge mit zylindrischem Einsteckende 11 ohne Längsnut gespannt werden. Dies ist in den Fig. 3 und 4 ersichtlich. In diesem Fall wird der Betätigungsring 9 in die in Fig. 4 dargestellte Stellung verdreht und das Mitnahmeelement 7 somit ausserhalb des durch die Führungsbacken 6 gegebenen Durchmesserbereiches gebracht. Wird nun ein Werkzeug mit zylindrischem Einsteckende 11 im Futter eingespannt, so erfolgt die Übertragung der Drehbewegung reibschlüssig über die Führungsbacken 6 auf das Einsteckende 11. In diesem Fall muss das Spannfutter so verspannt werden, dass kein Spiel zwischen dem Einsteckende 11 und den Führungsbacken 6 auftritt.

Durch die Anordnung des Betätigungsringes 9 auf der Konushülse 4 sind die Betätigungselemente für die Führungsbacken 6 sowie das Mitnahmeelement 7 miteinander gekoppelt, so dass beim Verstellen der Führungsbacken 6 das Mitnahmeelement 7 stets ausserhalb des durch die Führungsbacken 6 gegebenen Durchmesserbereiches liegt. Um ein Verstellen der Konushülse 4 und damit der Führungsbacken 6 während des Betriebes zu verhindern, kann auch hier die Konushülse 4 gegenüber dem Gewindering 2 mit Hilfe der Kontermutter 5 gesichert werden.

## Patentanspruch

Spannfutter und Bohrwerkzeug, wobei das Bohrwerkzeug ein zylindrisches Einsteckende (10, 11) aufweist, das Spannfutter mit wenigstens zwei radial verstellbaren Führungsbacken (6) und wenigstens einem radial verstellbaren, mit einer von der zylindrischen Mantelfläche des Einsteckendes (10) abweichenden Anschlagfläche (10a) in Eingriff bringbaren Mitnahmeelement (7) versehen ist und separate Betätigungselemente für das Verstellen der Führungsbacken (6) und Mitnahmeelemente (7) vorgesehen sind, dadurch gekennzeichnet, dass das Betätigungselement für die Führungsbacken (6) als axial verstellbare Konushülse (4) ausgebildet ist und das Betätigungselement für die Mitnahmeelemente (7) als eine Steuerkurve (9a) aufweisender, auf der Konushülse (4) begrenzt verdrehbar gelagerter Betätigungsring (9) ausgebildet ist.

## Claim

A chuck and (a) drilling tool, in which respect the drilling tool has a cylindrical plug-in end (10, 11), the chuck is provided with at least two radially adjustable guide jaws (6) and at least one radially adjustable entrainment element (7) which can be brought into engagement with a stop surface (10a) which deviates from the cylindrical surface of the plug-in end (10) and separate actuating elements are provided for the adjustable of the guide jaws (6) and entrainment elements (7), characterised in that the actuating element for the guide jaws (6) is designed as an axially adjustable taper sleeve (4) and the actuating element for the entrainment elements (7) is designed as an actuating ring (9) which has a control cam (9a) and which is mounted so as to be rotatable to limited extent on the taper sleeve (4).

## Revendication

Mandrin de serrage et outil de perçage, l'outil de perçage comprenant une extrémité d'introduction cylindrique (10, 11), le mandrin de serrage étant muni d'au moins deux coulisseaux (6) pouvant se déplacer radialement et d'au moins un élément d'entraînement (7) pouvant être amené en prise avec une surface de butée (10a) située à un niveau différent de la surface d'enveloppe cylindrique de l'extrémité d'introduction (10) et pouvant être déplacé radialement, et des éléments d'actionnement séparés étant prévus pour le réglage des coulisseaux (6) et des éléments d'entraînement (7), caractérisé en ce que l'élément d'actionnement des coulisseaux (6) est constitué sous forme d'une douille conique (4) pouvant être déplacée axialement, et l'élément d'actionnement des éléments d'entraînement (7) est constitué sous forme d'une bague d'actionnement (9) montée de façon rotative mais limitée sur la douille conique (4) et comprenant une came de commande (9a).

Fig.1  Fig.2  Fig.3  Fig.4

5